(19) **Europäisches Patentamt / European Patent Office / Office européen des brevets**

(11) **EP 4 681 940 A1**

(12) **EUROPEAN PATENT APPLICATION**
published in accordance with Art. 153(4) EPC

(43) Date of publication:
**21.01.2026 Bulletin 2026/04**

(21) Application number: **24770899.3**

(22) Date of filing: **12.03.2024**

(51) International Patent Classification (IPC):
**B60C 9/00** (2006.01)   **B60C 15/04** (2006.01)
**B60C 19/00** (2006.01)

(52) Cooperative Patent Classification (CPC):
**B60C 9/00; B60C 15/04; B60C 19/00**

(86) International application number:
**PCT/JP2024/009633**

(87) International publication number:
**WO 2024/190794 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.03.2023 JP 2023040158**

(71) Applicant: BRIDGESTONE CORPORATION
Chuo-ku
Tokyo 104-8340 (JP)

(72) Inventors:
- SHIZUKU, Takahisa
  Tokyo 104-8340 (JP)
- SATO, Takayuki
  Tokyo 104-8340 (JP)
- KAWASHIMA, Keisuke
  Tokyo 104-8340 (JP)
- TOKUTOMI, Kazutaka
  Tokyo 104-8340 (JP)

(74) Representative: Marks & Clerk LLP
15 Fetter Lane
London EC4A 1BW (GB)

(54) **TIRE**

(57) The object of the present disclosure is to provide a tire that can contribute to the recycling of resources, and the solution is a tire (100) including a bead core (40), wherein the bead core (40) includes a bead wire (41), 30 mass% or more of the bead wire (41) constituting the bead core (40) is made of steel material derived from recycled iron, and the steel material derived from recycled iron has an N element content of 60 mass ppm or more.

FIG. 1

EP 4 681 940 A1

# EP 4 681 940 A1

**Description**

TECHNICAL FIELD

The present disclosure relates to a tire.

BACKGROUND

In recent years, from the perspective of resource recycling, it has been required to use recycled materials for various members used in tires. For example, PTL 1 refers to the use of recycled organic fibers, particularly fibers made of recycled polyethylene terephthalate (PET), as reinforcing members for tires.

CITATION LIST

Patent Literatures

PTL 1: EP 3753965 A1

SUMMARY

(Technical Problem)

On the other hand, as reinforcing members for tires, in addition to organic fibers, for example, steel filaments are also used as bead wires constituting the bead core. Therefore, from the perspective of resource recycling, the use of steel filaments made from recycled iron as raw material is required.
Accordingly, the present disclosure has as its object to provide a tire that can contribute to resource recycling.

(Solution to Problem)

The gist configuration of the tire of the present disclosure that solves the above problem is as follows.

[1] A tire comprising a bead core,

wherein the bead core includes a bead wire,
30 mass% or more of the bead wire constituting the bead core is made of steel material derived from recycled iron, and
the steel material derived from recycled iron has an N element content of 60 mass ppm or more.

[2] The tire according to [1], wherein the steel material derived from recycled iron has a C element content of 0.7 to 1.0 mass%, a Cu element content of 0.01 to 0.4 mass%, and a Cr element content of 0.05 to 0.3 mass%.
[3] The tire according to [2], wherein the steel material derived from recycled iron has a Cu element content of 0.05 to 0.4 mass%.
[4] The tire according to any one of [1] to [3], wherein the bead wire is made of steel filament, and the steel filament has a diameter of 0.2 to 2.5 mm.
[5] The tire according to any one of [1] to [4], wherein the bead core includes both a bead wire made of steel material derived from non-recycled iron and a bead wire made of steel material derived from recycled iron.
[6] The tire according to [5], wherein the steel material derived from non-recycled iron has an N element content of 20 to 40 mass ppm, a C element content of 0.7 to 0.85 mass%, a Cu element content of 0 to 0.1 mass%, and a Cr element content of 0 to 0.1 mass%.

(Advantageous Effect)

According to the present disclosure, it is possible to provide a tire that can contribute to resource recycling.

BRIEF DESCRIPTION OF THE DRAWINGS

In the accompanying drawings:

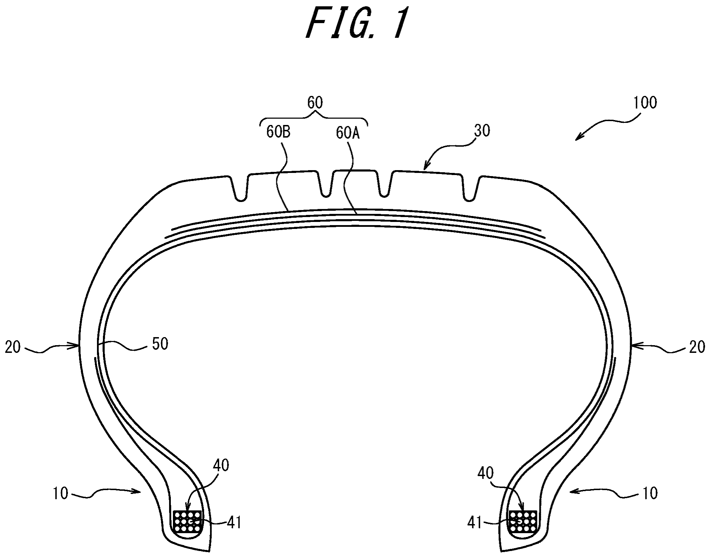

FIG. 1 is a cross-sectional view illustrating one embodiment of a tire of the present disclosure.

DETAILED DESCRIPTION

Hereinafter, the tire of the present disclosure will be exemplified and described in detail based on its embodiment.

<Definitions>

The compounds described in the present specification may be partially or entirely derived from fossil resources, biological resources such as plant resources, or recycled resources such as used tires. Further, they may be derived from a mixture of any two or more of fossil resources, biological resources, and recycled resources.

In the present specification, the N (nitrogen) element content, C (carbon) element content, Cu (copper) element content, Cr (chromium) element content, and Fe (iron) element content of steel material derived from recycled iron and steel material derived from non-recycled iron refer to the ladle value (i.e., the ladle value measured for the molten steel) in the state where the raw steel material is melted, and are values measured by spark discharge emission spectroscopic analysis.

<Tire>

The tire of the present embodiment includes a bead core. In the tire of the present embodiment, the bead core is composed of bead wire, 30 mass% or more of the bead wire constituting the bead core is made of steel material derived from recycled iron, and the steel material derived from recycled iron is characterized by having an N element content of 60 mass ppm or more.

In the tire of the present embodiment, by using bead wire made from steel material derived from recycled iron as the bead core, and further, by using bead wire made from steel material derived from recycled iron at a proportion of 30 mass% or more of the entire bead core, it is possible to contribute to the recycling of resources.

The tire of the present embodiment includes a bead core, the bead core includes bead wire, and 30 mass% or more of the bead wire constituting the bead core is made of steel material derived from recycled iron. When the proportion of bead wire made from steel material derived from recycled iron in the entire bead core is 30 mass% or more, resources can be sufficiently recycled.

The steel material derived from recycled iron is not particularly limited as long as it is recycled, and may be derived from scrap iron or steel cord taken from tires, for example. Further, from the viewpoint of reducing $CO_2$ emissions, it is preferable that the recycled iron is derived from an electric furnace (electric furnace steelmaking process). In the electric furnace steelmaking process, for example, an arc discharge is generated in the electric furnace, the raw material is melted by the heat of the discharge, impurities are removed, and iron (steel material) can be obtained. On the other hand, in the blast furnace process, which is generally used in conventional steelmaking, for example, iron ore is reduced using coke derived from coal in a blast furnace to obtain iron (steel material), and therefore, a large amount of $CO_2$ is inevitably generated. In general, the amount of $CO_2$ emissions in an electric furnace is about 1/4 that of a blast furnace, so by using recycled iron (steel material) derived from an electric furnace for steel filament, $CO_2$ emissions can be significantly reduced.

The steel material derived from recycled iron has an N (nitrogen) element content of 60 mass ppm or more. Generally, new iron (steel material) obtained from a blast furnace or the like has high purity and an N element content of less than 60 mass ppm, whereas general steel material derived from recycled iron (i.e., recycled iron that is not highly refined) has an N element content of 60 mass ppm or more. Bead wire made from steel material derived from recycled iron can be produced using such general recycled iron (steel material) as a raw material, and since high-level refining is not required, the manufacturing process is not complicated, energy consumption can be reduced, and $CO_2$ emissions can also be reduced, which is preferable from an environmental perspective. From a similar viewpoint, it is preferable that the steel material derived from recycled iron has an N element content of 70 mass ppm or more. Further, from the viewpoint of durability, it is preferable that the N element content of the steel material derived from recycled iron is 200 mass ppm or less, and more preferably less than 90 mass ppm. Note that various loads are applied to the bead core of a tire from various directions during manufacture and use of the tire. Therefore, the bead wire constituting the bead core is required to have excellent durability against twisting as one index of durability. Bead wire made from steel material derived from recycled iron with an N element content of less than 90 mass ppm is particularly excellent in durability against twisting.

The steel material derived from recycled iron preferably has a C (carbon) element content of 0.7 to 1.0 mass%, and more preferably 0.7 to 0.85 mass%. Steel material derived from recycled iron with a C element content within the above range does not require high-level refining and is easily obtainable. Further, steel material derived from recycled iron with a C element content of 0.85 mass% or less has high ductility. Therefore, bead wire made from steel material derived from recycled iron with a C element content of 0.7 to 0.85 mass% is less likely to break and has high durability.

The steel material derived from recycled iron preferably has a Cu (copper) element content of 0.01 to 0.4 mass%, and more preferably 0.05 to 0.4 mass%. Steel material derived from recycled iron with a Cu element content within the above range does not require high-level refining and is easily obtainable. Further, a tire using bead wire made from steel material derived from recycled iron with a Cu element content of 0.05 to 0.4 mass% is preferable from an environmental perspective, since it uses bead wire that can be manufactured from general steel material derived from recycled iron.

The steel material derived from recycled iron preferably has a Cr (chromium) element content of 0.05 to 0.3 mass%. Generally, new iron (steel material) obtained from a blast furnace or the like has high purity and a Cr element content of less than 0.05 mass%, whereas general steel material derived from recycled iron (i.e., recycled iron that is not highly refined) has a Cr element content of 0.05 mass% or more. Steel material derived from recycled iron with a Cr element content within the above range does not require high-level refining and is easily obtainable.

The steel material derived from recycled iron preferably has a C (carbon) element content of 0.7 to 1.0 mass%, a Cu (copper) element content of 0.01 to 0.4 mass%, and a Cr (chromium) element content of 0.05 to 0.3 mass%. Such steel material derived from recycled iron can be obtained without high-level refining, so the manufacturing process is not complicated, energy consumption can be reduced, and $CO_2$ emissions can also be reduced, which is preferable from an environmental perspective. Further, a tire using bead wire made from such steel material derived from recycled iron is preferable from an environmental perspective, since it uses bead wire that can be manufactured from general steel material derived from recycled iron. Note that the steel material derived from recycled iron preferably has iron as its main component, with an Fe (iron) element content of 98 mass% or more.

The bead wire may be a steel monofilament or may be formed by twisting a plurality of steel filaments.

The steel filament used for the bead wire preferably has a diameter of 0.2 to 2.5 mm. When the diameter of the steel filament is 0.2 mm or more, it is excellent in strength and durability, and is less likely to break during the drawing process. When the diameter of the steel filament is 2.5 mm or less, it is lightweight, so the tire can be made lighter. Bead wire and tires using steel filament with a diameter of 0.2 to 2.5 mm are highly durable and lightweight.

The bead core preferably includes both bead wire made from steel material derived from non-recycled iron and bead wire made from steel material derived from recycled iron. Recycled iron often contains impurities, and bead wire made from steel material derived from recycled iron is considered to have lower strength compared to general bead wire. In contrast, by including both bead wire made from steel material derived from recycled iron and bead wire made from steel material derived from non-recycled iron in the bead core, it is possible to contribute to the recycling of resources while suppressing a decrease in the durability of the bead core and tire.

The steel material derived from non-recycled iron preferably has an N (nitrogen) element content of 20 to 40 mass ppm, a C (carbon) element content of 0.7 to 0.85 mass%, a Cu (copper) element content of 0 to 0.1 mass%, and a Cr (chromium) element content of 0 to 0.1 mass%. When the bead core includes bead wire made from steel material derived from non-recycled iron having such a composition, a decrease in the durability of the bead core and tire can be further suppressed. Note that the steel material derived from non-recycled iron preferably has iron as its main component, with an Fe (iron) element content of 98 mass% or more.

As the steel material derived from non-recycled iron, one with few impurities is preferable, and for example, iron derived from iron ore (iron derived from a blast furnace) is preferable.

The steel filament used for the bead wire of the bead core preferably satisfies the following formula when the diameter of the filament is X (mm) and the tensile strength of the filament is Y (MPa):

$$4000 - 2000X \leq Y \leq 4500 - 2000X$$

By using a structure in which filaments satisfying the above formula are twisted together as the bead core, the strength of the bead core can be improved and the durability of the tire can be supplemented.

Here, the tensile strength of the filament is determined in accordance with ISO 17832:2009.

The hardness of the surface layer of the steel filament used for the bead wire of the bead core is preferably 90% to 110% relative to the hardness of the inner layer from the viewpoint of fatigue resistance, and particularly preferably 100%. The hardness can be measured, for example, by Vickers hardness. The surface layer of the filament refers to the layer up to a depth of 0.01 mm from the outermost surface, and the inner side thereof refers to the inner layer of the filament. The hardness can be measured at a depth of 0.005 mm from the outermost surface for the surface layer, and at a region deeper than 0.04 mm for the inner layer.

The structure of the bead core is not particularly limited, but examples include a cable bead composed of a core made of steel or other metal formed in an annular shape and a sheath composed of at least two sheath layers in which sheath filament made of steel is spirally wound around the core, and a strand bead formed by winding one or more elastomer-coated cords in parallel in the tire circumferential direction and stacking them in the tire width direction and tire radial direction.

The structure of the bead wire constituting the bead core is not particularly limited, but examples include bronze-plated steel wire and brass-plated steel wire.

In the bead core, the bead wires may be arranged with gaps between them without being in close contact with each other. In such a structure, coating rubber easily penetrates into the inside of the bead wire, thereby improving the durability of the bead core.

Further, the surface of the bead core or the surface of the bead wire may be coated with resin. In such a structure, the durability of the bead core is improved. Examples of the resin include thermoplastic resin and thermoplastic elastomer. Examples of the thermoplastic resin include polyamide-based thermoplastic resin, polyester-based thermoplastic resin, olefin-based thermoplastic resin, polyurethane-based thermoplastic resin, vinyl chloride-based thermoplastic resin, and polystyrene-based thermoplastic resin. On the other hand, examples of the thermoplastic elastomer include polyamide-based thermoplastic elastomer (TPA), polyester-based thermoplastic elastomer (TPC), polystyrene-based thermoplastic elastomer (TPS), polyurethane-based thermoplastic elastomer (TPU), olefin-based thermoplastic elastomer (TPO), thermoplastic rubber crosslinked product (TPV), or other thermoplastic elastomers (TPZ).

The tire of the present embodiment can be applied to various vehicles, for example, passenger vehicle tires, truck and bus tires, large-sized tires for construction vehicles, motorcycle tires, and tires in general. Further, the tire of the present embodiment may be a pneumatic tire or a non-pneumatic tire.

(One Embodiment)

Next, one embodiment of the tire of the present disclosure will be exemplified and described in detail with reference to the drawings.

FIG. 1 is a cross-sectional view of one embodiment of the tire of the present disclosure. The tire 100 illustrated in FIG. 1 includes a pair of bead portions 10, a pair of sidewall portions 20, a tread portion 30, a carcass 50 extending in a toroidal shape between bead cores 40 embedded in the bead portions 10, and a belt 60 composed of two belt layers 60A and 60B disposed in the tread portion 30 (more specifically, disposed on the tire radial direction outer side of the crown portion of the carcass 50).

In the tire 100 illustrated in FIG. 1, the bead cores 40 are embedded in each of the pair of bead portions 10. The bead core 40 is formed by a plurality of bead wires 41. At least a part of the bead wires 41 is made of steel material derived from recycled iron. For example, the bead core 40 can be formed by winding a plurality of single-strand bead wires 41 in an annular shape while moving them in the row direction (tire width direction) and the tier direction (tire radial direction). Here, the surface of the bead wire 41 may be coated with resin as described above. When the surface of the bead wire 41 is coated with resin, the positional relationship between the bead wires 41 is less likely to change, and the cross-sectional shape of the bead core 40 can be stabilized.

Further, although the cross-section of the bead core 40 of the tire 100 illustrated in FIG. 1 is rectangular, the cross-sectional shape of the bead core of the tire of the present disclosure is not particularly limited and may be a polygon such as a pentagon or hexagon, or may be circular.

In the tire 100 illustrated in FIG. 1, the carcass 50 is composed of a single carcass ply, and includes a main body portion extending in a toroidal shape between the pair of bead cores 40 embedded in the bead portions 10, and a turn-up portion wound radially outward around each bead core 40 from the inner side to the outer side in the tire width direction. However, the number of plies and structure of the carcass in the tire of the present disclosure are not limited thereto. Here, the carcass ply constituting the carcass 50 is preferably formed by coating a plurality of reinforcing cords extending in a direction substantially perpendicular to the tire circumferential direction (for example, extending at an angle of 70° to 90°) with coating rubber, that is, the carcass 50 is preferably a radial carcass. As the reinforcing cord for the carcass 50, in addition to organic fiber cords such as polyethylene terephthalate cord, nylon cord, and rayon cord, steel cord may also be used.

Further, the belt 60 of the tire 100 illustrated in FIG. 1 is composed of two belt layers 60A and 60B, and each belt layer 60A, 60B is usually formed by coating reinforcing cords (preferably steel cords) extending at an inclination (for example, at an angle of 15° to 40°) with respect to the tire equator with coating rubber, and further, the two belt layers 60A and 60B are laminated so that the reinforcing cords constituting the belt layers 60A and 60B cross each other across the tire equator to form the belt 60.

Note that although the belt 60 in FIG. 1 is composed of two belt layers 60A and 60B, the number of belt layers constituting the belt is not limited thereto.

The coating rubber covering the bead core 40, carcass 50, and belt 60 (belt layers 60A and 60B) is not particularly limited, and various elastomers can be applied.

The elastomer preferably has a 50% modulus value of 1.5 MPa or more as measured in accordance with JIS K 6251 (2010), more preferably 1.8 MPa or more, and still more preferably 2.0 MPa or more.

As the main component of the elastomer, examples include natural rubber (NR), isoprene rubber (IR), epoxidized natural rubber, styrene-butadiene rubber (SBR), butadiene rubber (BR, high-cis BR, and low-cis BR), nitrile rubber (NBR), hydrogenated NBR, hydrogenated SBR, and other diene rubbers and their hydrogenated products; ethylene-propylene rubber (EPDM, EPM), maleic acid-modified ethylene-propylene rubber (M-EPM), butyl rubber (IIR), copolymers of isobutylene and aromatic vinyl or diene-based monomers, acrylic rubber (ACM), ionomer, and other olefin-based rubbers; Br-IIR, CI-IIR, brominated copolymer of isobutylene and paramethylstyrene (Br-IPMS), chloroprene rubber (CR), hydrin rubber (CHR), chlorosulfonated polyethylene rubber (CSM), chlorinated polyethylene rubber (CM), maleic acid-modified chlorinated polyethylene rubber (M-CM), and other halogen-containing rubbers; methylvinyl silicone rubber, dimethyl silicone rubber, methylphenylvinyl silicone rubber, and other silicone rubbers; polysulfide rubber and other sulfur-containing rubbers; vinylidene fluoride-based rubber, fluorinated vinyl ether-based rubber, tetrafluoroethylene-propylene-based rubber, fluorinated silicone-based rubber, fluorinated phosphazene-based rubber, and other fluororubbers; and thermoplastic elastomers such as styrene-based elastomer, olefin-based elastomer, ester-based elastomer, urethane-based elastomer, and polyamide-based elastomer. The 50% modulus value of the elastomer (coating rubber) is a value measured in accordance with JIS K 6251 (2010) after vulcanizing the rubber composition of each sample at 145°C for 40 minutes to obtain vulcanized rubber.

Further, the elastomer may be appropriately blended with sulfur, vulcanization accelerator, carbon black, and, in addition, antioxidant, zinc oxide (zinc white), stearic acid, and other additives commonly used in rubber products such as tires.

It should be noted that the tire of the present disclosure only needs to be provided with a bead core, and various modifications can be made. For example, it is possible to dispose a bead filler on the tire radial outside of the bead core 40 of the tire 100 illustrated in FIG. 1, or to dispose a belt reinforcement layer on the tire radial outside of the belt 60.

EXAMPLES

Hereinafter, the present disclosure will be described in further detail by way of examples, but the present disclosure is not limited in any way to the following examples.

(Steel Wires for Testing)

A steel wire 1 and a steel wire 2 produced from recycled iron derived from an electric furnace were prepared. Here, the N element content of the steel wire 1, as measured by spark discharge atomic emission spectrometry, was 71 mass ppm, and the N element content of the steel wire 2, as measured by spark discharge atomic emission spectrometry, was 90 mass ppm. The durability against twisting of these steel wires was evaluated by the following method.

(Twisting Test)

Both ends of a 20 cm long test steel wire were fixed, and the wire was twisted by rotating it in one direction (clockwise with respect to the axial direction of the steel wire) until the test steel wire fractured, and the total number of rotations until fracture was determined and evaluated according to the following criteria. The results are presented in Table 1.

Excellent: Total number of rotations until fracture is 50 or more
Good: Total number of rotations until fracture is 20 to 49
Poor: Total number of rotations until fracture is 19 or less

[Table 1]

|  | Steel wire 1 | Steel wire 2 |
|---|---|---|
| Nitrogen content (mass ppm) | 71 | 90 |
| Evaluation result of twisting test | Excellent | Poor |

From Table 1, it can be understood that the steel wire 1, with an N element content of less than 90 mass ppm, exhibits excellent durability against twisting.

REFERENCE SIGNS LIST

100: tire
10: bead portion
20: sidewall portion
30: tread portion

40: bead core
41: bead wire
50: carcass
60: belt
60A, 60B: belt layer

## Claims

1. A tire comprising a bead core,

   wherein the bead core includes a bead wire,
   30 mass% or more of the bead wire constituting the bead core is made of steel material derived from recycled iron, and
   the steel material derived from recycled iron has an N element content of 60 mass ppm or more.

2. The tire according to claim 1, wherein the steel material derived from recycled iron has a C element content of 0.7 to 1.0 mass%, a Cu element content of 0.01 to 0.4 mass%, and a Cr element content of 0.05 to 0.3 mass%.

3. The tire according to claim 2, wherein the steel material derived from recycled iron has a Cu element content of 0.05 to 0.4 mass%.

4. The tire according to claim 1, wherein the bead wire is made of steel filament, and the steel filament has a diameter of 0.2 to 2.5 mm.

5. The tire according to claim 1, wherein the bead core includes both a bead wire made of steel material derived from non-recycled iron and a bead wire made of steel material derived from recycled iron.

6. The tire according to claim 5, wherein the steel material derived from non-recycled iron has an N element content of 20 to 40 mass ppm, a C element content of 0.7 to 0.85 mass%, a Cu element content of 0 to 0.1 mass%, and a Cr element content of 0 to 0.1 mass%.

FIG. 1

EP 4 681 940 A1

## INTERNATIONAL SEARCH REPORT

| International application No. |
|---|
| **PCT/JP2024/009633** |

### A.    CLASSIFICATION OF SUBJECT MATTER

***B60C 9/00***(2006.01)i; ***B60C 15/04***(2006.01)i; ***B60C 19/00***(2006.01)i
FI:    B60C9/00 K; B60C15/04 C; B60C15/04 D; B60C15/04 Z; B60C19/00 L

According to International Patent Classification (IPC) or to both national classification and IPC

### B.    FIELDS SEARCHED

Minimum documentation searched (classification system followed by classification symbols)

B60C1/00-B60C19/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| Y | US 2016/0286712 A1 (OTICO) 06 October 2016 (2016-10-06)<br>claims, paragraph [0074], fig. 4 | 1-6 |
| Y | 日鉄総研株式会社, カーボン ニュートラルを踏まえた我が国金属産業の持続的発展に向けた調査事業報告書, February 2022, non-official translation (NITTETSU SOKEN KK. Research report toward sustainable development of Japanese metal industry based on carbon neutrality.)<br>pp. 4-6, 33, line 17, p. 33, line27 to p. 34, line 4 | 1-6 |
| X | JP 2021-161445 A (NIPPON STEEL CORPORATION) 11 October 2021 (2021-10-11)<br>claims, paragraphs [0024]-[0025], [0059] -[0069], tables 1, 3, steel D1, test no. 6 | 1-4 |

☐ Further documents are listed in the continuation of Box C.    ☑ See patent family annex.

| | |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **12 April 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
**Information on patent family members**

International application No.

**PCT/JP2024/009633**

| Patent document cited in search report | | | Publication date (day/month/year) | Patent family member(s) | | | Publication date (day/month/year) |
|---|---|---|---|---|---|---|---|
| US | 2016/0286712 | A1 | 06 October 2016 | EP | 3075220 | A1 | |
| | | | | FR | 3034283 | A | |
| | | | | AU | 2016201934 | A | |
| | | | | RU | 2016110145 | A | |
| | | | | CA | 2924302 | A1 | |
| JP | 2021-161445 | A | 11 October 2021 | (Family: none) | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3753965 A1